# EUROPEAN PATENT APPLICATION

(11) **EP 4 027 413 A1**
(43) Date of publication of application: **13.07.2022**
(21) Application number: 21799557.0
(22) Date of filing: 07.05.2021
(51) Int. Cl.: H01M 4/66, H01M 4/62, H01M 4/13, H01M 10/058, H01M 10/052, H01M 4/02

(54) **ANODE CURRENT COLLECTOR FOR LITHIUM-FREE BATTERY, ELECTRODE ASSEMBLY INCLUDING SAME AND LITHIUM-FREE BATTERY**

(30) Priority: 08.05.2020 KR 20200055159; 04.02.2021 KR 20210016113
(71) Applicant: LG ENERGY SOLUTION, LTD., Seoul 07335 (KR)
(72) Inventor: YUN, Hyunwoong, Daejeon 34122 (KR); HAH, Hoejin, Daejeon 34122 (KR); LEE, Jung Pil, Daejeon 34122 (KR)
(74) Representative: Hoffmann Eitle
(86) International application number: PCT/KR2021/005756
(87) International publication number: WO 2021/225417

(57) **Abstract**

A negative electrode current collector for a lithium free battery according to an embodiment of the present disclosure is a negative electrode current collector for a lithium free battery including: a metal current collecting substrate, a conductive layer that is formed on at least one surface of the metal current collecting substrate and includes a conductive material; and a metal layer that is formed on the conductive layer and has a grain boundary, wherein the metal layer comprises a metal powder layer, a metal wire layer, or a mixed layer thereof.

## Description

### [TECHNICAL FIELD]

### Cross Citation with Related Application(s)

This application claims the benefit of Korean Patent Application No. 10-2020-0055159 filed on May 8, 2020 and Korean Patent Application No. 10-2021-0016113 filed on February 4, 2021 with the Korean Intellectual Property Office, the disclosures of which are incorporated herein by reference in their entirety.

The present disclosure relates to a negative electrode current collector for lithium free battery, an electrode assembly including the same, and a lithium free battery.

### [BACKGROUND ART]

Due to the rapid increase in the use of fossil fuels, the demand for the use of alternative energy or clean energy is increasing, and as a part thereof, the fields that are being studied most actively are the fields of power generation and power storage using electrochemistry.

Currently, a secondary battery is a representative example of an electrochemical device that utilizes such electrochemical energy, and the range of use thereof tends to be gradually expanding.

Recently, with the increase of the technological development and demand for mobile devices such as portable computers, portable phones, and cameras, demand for secondary batteries as an energy source rapidly increases. Among such secondary batteries, many studies have been conducted on an eco-friendly lithium secondary battery that exhibits high charge/discharge characteristics and lifetime characteristics, and has been commercialized and widely used.

In general, a lithium secondary battery has a structure in which a non-aqueous electrolyte solution is impregnated into an electrode assembly including a positive electrode, a negative electrode, and a porous separator. Further, the positive electrode is generally prepared by coating a positive electrode mixture including a positive electrode active material onto aluminum foil, and the negative electrode is prepared by coating a negative electrode mixture including a negative electrode active material onto a copper foil.

Usually, the positive electrode active material is a lithium transition metal oxide, and the negative active material uses a carbon-based material.

However, recently, a lithium metal battery using lithium metal itself as a negative electrode active material has been commercialized. Furthermore, lithium free batteries, in which only a current collector is used as a negative electrode in the preparation of electrodes, lithium is provided from the positive electrode by discharging, and the resulting lithium metal is used as the negative electrode active material, are being actively studied. The lithium free batteries are considered as a battery concept that can achieve the highest energy density from the viewpoint of high energy density.

However, in the negative electrode made only of the current collector, a lithium layer is formed by electrodeposition due to charging. At this time, a lithium layer having a low deposition density is formed on the current collector, and side reactions of the electrolyte solution are severe, causing quick deterioration of lifetime characteristics.

Therefore, there is a need to develop a negative electrode current collector capable of solving the above problems and being used in a lithium free battery.

### [DETAILED DESCRIPTION OF THE INVENTION]

### [Technical Problem]

The present disclosure has been made to solve the above-mentioned problems and other technical problems that have yet to be resolved.

Specifically, an object of the present disclosure is to provide a negative electrode current collector in which a lithium layer having a high deposition density can be formed by a simpler method.

Another object of the present disclosure is to prevent a side reaction of an electrolyte solution of a lithium free battery using the same, thereby improving the lifetime characteristics.

### [Technical Solution]

In order to achieve the above object, according to one embodiment of the present disclosure, there is provided a negative electrode current collector for a lithium free battery, the negative electrode current collector comprising: a metal current collecting substrate, a conductive layer that is formed on at least one surface of the metal current collecting substrate and includes a conductive material; and a metal layer that is formed on the conductive layer and has a grain boundary, wherein the metal layer comprises a metal powder layer, a metal wire layer, or a mixed layer thereof.

The metal current collecting substrate may be at least one selected from the group consisting of copper, stainless steel, aluminum, nickel, titanium, calcined carbon, and an aluminum-cadmium alloy.

The metal current collecting substrate may be a metal containing copper.

The conductive layer may be a primer layer, a conductive polymer layer, or a conductive epoxy layer.

The primer layer may include a conductive material and an adhesive material, and the conductive material may include at least one selected from the group consisting of natural graphite, artificial graphite, graphene, carbon black, channel black, furnace black, lamp black, thermal black, carbon nanotube, graphite nanofiber, carbon nanofiber, aluminum, nickel, zinc oxide, potassium titanate, titanium oxide and a polyphenylene derivative.

The conductive polymer layer may include at least one conductive polymer selected from the group consisting of poly(3,4-ethylenedioxythiophene)/poly(4-styrene sulfonate) (PEDOT/PSS), polyaniline (PANI), polypyrrole (PPy), polythiophene (PT), polyacetylene (PA), and poly para-phenylene vinylene (PPV).

The conductive epoxy layer may include a conductive filler and a binder, and the conductive filler may include at least one selected from the group consisting of metal powders of gold, platinum, silver, copper, or nickel, carbon or carbon fibers, graphite, and composite powders.

The metal layer may be a form in which at least one material selected from copper, stainless steel, aluminum, nickel, titanium, calcined carbon, aluminum-cadmium alloy, Mg, Ca, Si, Ge, Sn, Pb, As, Sb, Bi, Ag, Zn, Cd, P and Hg has a grain boundary, and the metal powder of the metal powder layer or the metal wire of the metal wire layer has a diameter of 0.01 *µ*m to 30 *µ*m.

The metal wire may have an aspect ratio (wire length / wire diameter) of 3 or more.

The mixed layer may include at least one metal powder selected from the group consisting of copper, stainless steel, nickel, titanium, calcined carbon, and an aluminum-cadmium alloy, and at least one metal wire selected from the group consisting of Mg, Ca, Al, Si, Ge, Sn, Pb, As, Sb, Bi, Ag, Zn, Cd, P and Hg.

The mixed layer may include at least one metal powder selected from the group consisting of Mg, Ca, Al, Si, Ge, Sn, Pb, As, Sb, Bi, Ag, Zn, Cd, P and Hg, and at least one metal wire selected from the group consisting of copper, stainless steel, nickel, titanium, calcined carbon, and an aluminum-cadmium alloy.

A total thickness of the conductive layer and the metal layer may be in the range of 0.1 *µ*m to 60 *µ*m.

The conductive layer may have a thickness in the range of 0.1 *µ*m to 20 *µ*m.

The metal layer may have a thickness in the range of 0.1 *µ*m to 40 *µ*m.

According to another embodiment of the present disclosure, there is provided an electrode assembly comprising: the above-mentioned negative electrode current collector; a positive electrode having a structure in which a positive electrode mixture including an active material is applied to at least one surface of a positive electrode current collector; and a separator interposed between the negative electrode current collector and the positive electrode.

According to yet another embodiment of the present disclosure, there is provided a lithium free battery comprising a positive electrode, a negative electrode, a separator, and a lithium non-aqueous electrolyte, wherein the negative electrode comprises the negative electrode current collector of claim 1, and a lithium layer formed on the negative electrode current collector. At this time, the lithium layer may be formed by charging a lithium free battery.

### [DETAILED DESCRIPTION OF THE EMBODIMENTS]

Hereinafter, the present disclosure will be described in more detail for promoting an understanding of the invention.

Terms and words used in this specification and claims should not be interpreted as limited to commonly used meanings or meanings in dictionaries and should be interpreted with meanings and concepts which are consistent with the technological scope of the invention based on the principle that the inventors have appropriately defined concepts of terms in order to describe the invention in the best way.

The term provided herein is merely used for the purpose of describing particular embodiments, and is not intended to be limiting of the present disclosure. The singular forms "a," "an," and "the" are intended to include the plural forms as well, unless the context clearly indicates otherwise.

Further, throughout the specification, when a portion is referred to as "including" a certain component, it means that the portion can further include other components, without excluding the other components, unless otherwise stated.

According to one embodiment of the present disclosure, there is provided a negative electrode current collector for a lithium free battery, the negative electrode current collector comprising: a metal current collecting substrate, a conductive layer that is formed on at least one surface of the metal current collecting substrate and includes a conductive material; and a metal layer that is formed on the conductive layer and has a grain boundary, wherein the metal layer comprises a metal powder layer, a metal wire layer, or a mixed layer thereof.

The metal current collecting substrate may be at least one selected from the group consisting of copper, stainless steel, aluminum, nickel, titanium, calcined carbon, and an aluminum-cadmium alloy. The copper may be copper that is surface-treated with dissimilar metal, and the stainless steel may be stainless steel that is surface-treated with dissimilar metal.

Specifically, due to the electrical conductivity, cost, safety and the like, the metal current collecting substrate may be a metal containing copper, more specifically may be formed of copper.

This metal current collecting substrate is not significantly different from the thickness of the negative electrode current collector used in a conventional lithium free battery, and specifically, it may be formed to have a thickness of 3 to 200 *µ*m, preferably a thickness of 5 to 40 *µ*m, and more preferably a thickness of 8 to 20 *µ*m.

Conventionally, in the lithium free battery, such a metal current collecting substrate was used as a negative electrode current collector.

However, as described above, when only such a metal current collecting substrate is used as a negative electrode current collector, and when lithium is electrodeposited through charge and discharge, a lithium layer having a low deposition density is formed, and a side reaction of an electrolyte solution is severe, causing quick deterioration of lifetime characteristics. This is because the specific surface area of the metal used as the metal current collecting substrate is small and the affinity with lithium is low, so that when lithium is electrodeposited, it is electrodeposited randomly.

In order to solve these problems, according to this embodiment, as a thin layer on the metal current collecting substrate, a metal layer having a grain boundary is formed, whereby the specific surface area increases and the resistance decreases. When lithium is electrodeposited through subsequent charge/discharge, a lithium layer having a high deposition density may be formed.

On the other hand, at the same time, when a conductive layer is formed between the metal layer and the metal current collecting substrate, not only higher electronic conductivity can be secured to prevent a decrease in electronic conductivity due to the formation of the metal layer having a grain boundary, but also it is possible to enhance the coupling force between the metal layer and the metal current collecting substrate.

The conductive layer may be a primer layer, a conductive polymer layer, or a conductive epoxy layer. The primer layer may include a conductive material and an adhesive material.

The conductive material is not particularly limited as long as it is a component that maintains conductivity by electrically connecting the metal current collecting substrate and the metal layer. For example, the conductive material may include at least one selected from the group consisting of natural graphite, artificial graphite, graphene, carbon black, channel black, furnace black, lamp black, thermal black, carbon nanotube, graphite nanofiber, carbon nanofiber, aluminum, nickel, zinc oxide, potassium titanate, titanium oxide and a polyphenylene derivative.

The adhesive material is for fixing the conductive material onto the current collector, forming a coating film, and achieving coupling between the metal current collecting substrate and the metal layer, and examples thereof may include at least one selected from the group consisting of polyvinylidene fluoride, polyvinyl alcohol, carboxymethylcellulose(CMC), starch, hydroxypropylcellulose(HPC), regenerated cellulose, polyvinylpyrrolidone, polytetrafluoroethylene, polyethylene, polypropylene, ethylene-propylene-diene monomer (EPDM), sulfonated EPDM, styrene butadiene, and fluororubber.

When the primer layer includes a conductive material and an adhesive material together, a weight ratio of the conductive material and the adhesive material may be 1:99 to 99:1, preferably 3:7 to 7:3.

When the weight ratio is less than the above range, the content of the conductive material is too small, and the operating characteristics of the battery are deteriorated due to the increase in internal resistance. On the contrary, when the weight ratio exceeds the above range, the content of the adhesive material is too small and thus, sufficient coupling force cannot be obtained.

A method of forming the primer layer can utilize a coating film forming method commonly used in the art. For example, methods, including a wet coating method such as gravure coating, slot-die coating, spin coating, spray coating, bar coating, dip coating; and a dry coating method such as thermal evaporation, E-beam evaporation, Chemical Vapor Deposition (CVD), sputtering can be used.

The conductive polymer layer may include polymers commonly known as conductive polymers, and examples of the conductive polymer may include at least one conductive polymer selected from the group consisting of poly(3,4-ethylenedioxythiophene)/poly(4-styrene sulfonate) (PEDOT/PSS), polyaniline (PANI), polypyrrole (PPy), polythiophene (PT), polyacetylene (PA), and poly para-phenylene vinylene (PPV).

The conductive polymer layer can be formed by producing a conductive polymer melt or a mixed solution in which these are dissolved in a solvent, and using various wet coating methods as described in the coating method of the primer layer. At this time, when the conductive polymer is mixed with a solvent, the solvent may be a polar organic solvent, and examples thereof include chloroform, dichloromethane, m-cresol, tetrahydrofuran (THF), dimethylformamide (DMF) and the like.

On the other hand, since the conductive polymer layer exhibits a coupling force in the polymer itself, a separate adhesive material or the like is not required.

However, for stronger coupling, the adhesive material as disclosed in the conductive polymer layer can be further included, at which time its content may be 0.1 to 10% by weight based on the total weight of the conductive polymer layer.

Further, the conductive epoxy layer may include a conductive filler, and a binder.

Specifically, the conductive epoxy layer is used as an adhesive by mixing a conductive filler and a binder.

The conductive filler may be at least one selected from the group consisting of metal powders of gold, platinum, silver, copper, or nickel, carbon or carbon fibers, graphite, and composite powders.

The binder is a component that couples the conductive filler, without being limited thereto, but examples thereof may be at least one selected from the group consisting of acrylic-based, epoxy-based, polyurethane-based, silicone-based, polyimide-based, phenol-based, polyester-based polymer materials, composite polymer resins, and low-melting point glass.

On the other hand, the conductive epoxy layer may be classified into a normal-temperature drying type, a normal-temperature curing type, a heat curing type, a high-temperature calcination type, a UV curing type, and the like, depending on how they are produced. The normal-temperature drying type can be formed by containing a conductive filler in a binder such as acrylic-based and a solvent, and drying it at a normal temperature, and the normal-temperature curing type may be formed by additionally containing a highly reactive curing agent as a two-component type, and curing a solvent containing a conductive filler and a binder.

In addition, the heat curing type can be formed by mainly using an epoxy-based binder and applying heat to a solvent containing a conductive filler, and the high-temperature calcination type can be formed by subjecting to heat treatment and curing at a high temperature, and the UV curing type can be formed through curing by UV irradiation.

At this time, the conductive filler and the binder may also be contained in a weight ratio of 1:99 to 99:1, specifically, a weight ratio of 7:3 to 3:7.

When the conductive filler is contained in a very small amount outside the above range, the conductivity decreases and the resistance increases, and when the binder is contained in a very small amount, the coupling force of the conductive filler cannot be obtained, which is not preferable.

On the other hand, the metal layer can perform the role of increasing the deposition density of lithium by increasing the actual specific surface area. The metal layer may include a metal powder layer, a metal wire layer, or a mixed layer thereof, wherein the metal layer may be, for example, a form in which at least one material selected from copper, stainless steel, aluminum, nickel, titanium, calcined carbon, aluminum-cadmium alloy, Mg, Ca, Si, Ge, Sn, Pb, As, Sb, Bi, Ag, Zn, Cd, P and Hg has a grain boundary. At this time, the metal powder of the metal powder layer or the metal wire of the metal wire layer may have a diameter of 0.01 *µ*m to 30 *µ*m.

Forms having a too small diameter outside the above range are difficult to manufacture, and when the diameter is too large outside the above range, the effect of increasing the specific surface area is insignificant, which is not preferable.

Further, the metal wire may have an aspect ratio (wire length / wire diameter) of 3 or more. More specifically, the aspect ratio may be 3 or more and 2000 or less.

On the other hand, the mixed layer may include at least one metal powder selected from the group consisting of copper, stainless steel, nickel, titanium, calcined carbon, and an aluminum-cadmium alloy, and at least one metal wire selected from the group consisting of Mg, Ca, Al, Si, Ge, Sn, Pb, As, Sb, Bi, Ag, Zn, Cd, P and Hg. Alternatively, the mixed layer may include at least one metal powder selected from the group consisting of Mg, Ca, Al, Si, Ge, Sn, Pb, As, Sb, Bi, Ag, Zn, Cd, P and Hg, and at least one metal wire selected from the group consisting of copper, stainless steel, nickel, titanium, calcined carbon, and an aluminum-cadmium alloy.

At this time, the content when the metal powder and the metal wire are mixed is not limited, and may be 1:99 to 99:1, specifically 8:2 to 2:8, more specifically, 3:7 to 7:3, on a weight basis.

That is, the mixed layer may be a form in which the metal powder and the metal wire are mixed. Materials belonging to the group consisting of Mg, Ca, Al, Si, Ge, Sn, Pb, As, Sb, Bi, Ag, Zn, Cd, P and Hg as described above are metals alloyed with Li, and can form a lithium layer having a higher deposition density by adding the effect of increasing the specific surface area and the effect of alloying a part of the metal.

The metal powder layer, the metal wire layer, or the mixed layer is not limited in the manufacturing method, but they may be prepared, for example, by coating a dispersion, in which the metal powder or the metal wire is dispersed, onto the conductive layer, and drying it.

In addition, specifically, the metal layer may further include an adhesive material as described for the primer layer in addition to the metal powder, and/or the metal wire for strong coupling of the metal.

When a metal layer having a grain boundary is included in this way, the specific surface area of the negative electrode current collector increases, and the site where lithium ions generated by charging and discharging can be electrodeposited increases, so that a lithium layer having improved deposition density can be obtained.

The metal layer may have a thickness of 0.1 *µ*m to 40 *µ*m, specifically 1 *µ*m to 30 *µ*m, and more specifically, 1 *µ*m to 20 *µ*m.

When the metal layer is formed too thickly outside the above range, the volume increases and the energy density decreases. When the metal layer is formed too thinly, the effect of improving the deposition density of the lithium layer cannot be obtained as an effect intended by the present disclosure, which is not preferable.

Similarly, the conductive layer may have a thickness of 0.1 *µ*m to 20 *µ*m, specifically 1 *µ*m to 10 *µ*m, and more specifically 1 *µ*m to 5 *µ*m.

When the conductive layer is formed too thickly outside the above range, the overall thickness of the negative electrode current collector increases, which is not preferable, and when the conductive layer is formed too thinly, the effect of recovering conductivity cannot be exhibited, which is not preferable.

In the negative electrode current collector for a lithium free battery according to this embodiment, a total thickness of the conductive layer and the metal layer may be in the range of 0.1 *µ*m to 60 *µ*m. Specifically, the total thickness may be in the range of 0.2 *µ*m to 60 *µ*m, or the total thickness may be in the range of 2 *µ*m to 20 *µ*m.

When the thickness is too thin outside the above range, it is difficult to obtain the effect of improving the deposition density of the lithium layer intended by the present disclosure, and when the thickness is too thick, the overall thickness of the negative electrode current collector increases, and thus, the energy density decreases, which is not preferable.

According to another embodiment of the present disclosure, there is provided an electrode assembly comprising: the above-mentioned negative electrode current collector; a positive electrode having a structure in which a positive electrode mixture including an active material is applied to at least one surface of a positive electrode current collector; and a separator interposed between the negative electrode current collector and the positive electrode.

According to this embodiment, since the lithium-free battery uses the negative electrode current collector as the negative electrode at the time of first manufacturing the electrode assembly, the negative electrode in the electrode assembly can be formed of a negative electrode current collector.

Thereafter, the negative electrode current collector receives lithium from the positive electrode in response to charging of a lithium free battery prepared thereafter, and forms a lithium layer on the current collector, which is used as an active material.

On the other hand, the positive electrode has a structure in which a positive electrode mixture including an active material is applied to at least one surface of a positive electrode current collector.

The positive electrode current collector is not particularly limited as long as it has conductivity while not causing chemical changes in the battery, and for example, stainless steel, aluminum, nickel, titanium, calcined carbon, or aluminum or stainless steel that is surface-treated with carbon, nickel, titanium, silver, or the like may be used. In addition, the positive electrode current collector may have a thickness of 3 *µ*m to 500 *µ*m, and can have fine irregularities formed on the surface of the current collector to increase the adhesive force of the positive electrode active material. For example, it may be used in various forms such as films, sheets, foils, nets, porous bodies, foams, and nonwoven fabrics.

The positive electrode active material as the active material may be, for example, a layered compound such as lithium nickel oxide (LiNiO₂) or a compound substituted with one or more transition metals; lithium manganese oxides such as chemical formulae Li₁₊ₓMn₂₋ₓO₄ (where x is 0 to 0.33), LiMnO₃, LiMn₂O₃, LiMnO₂; lithium copper oxide (Li₂CuO₂); vanadium oxides such as LiV₃O₈, LiFe₃O₄, V₂O₅, and Cu₂V₂O₇; a Ni-site type lithium nickel oxide represented by chemical formula LiNi₁₋ₓMₓO₂ (where M = Co, Mn, Al, Cu, Fe, Mg, B or Ga, and x= 0.01 ~ 0.3); lithium manganese composite oxide represented by chemical formulae LiMn₂₋ₓMₓO₂ (where M = Co, Ni, Fe, Cr, Zn or Ta, and x = 0.01 to 0.1) or Li₂Mn₃MO₈ (where M = Fe, Co, Ni, Cu or Zn ); LiMn₂O₄ with a Li portion of the chemical formula substituted with an alkaline earth metal ion; a disulfide compound; Fe₂(MoO₄)₃, and the like, without being limited thereto.

The positive electrode mixture may further include a conductive material and a binder together with the positive electrode active material described above.

The conductive material is generally added in an amount of 0.1 to 30% by weight, specifically 1 to 10% by weight, and more specifically 1 to 5% by weight, based on the total weight of the positive electrode mixture layer. The conductive material is not particularly limited as long as it has high conductivity without causing a chemical change in the battery, and for example, graphite such as natural graphite and artificial graphite; carbon blacks such as carbon black, acetylene black, ketjen black, channel black, furnace black, lamp black, and thermal black; conductive fibers such as carbon fiber and metal fiber; metal powders such as carbon fluoride powder, aluminum powder, and nickel powder; conductive whiskey such as zinc oxide and potassium titanate; conductive metal oxides such as titanium oxide; conductive materials such as polyphenylene derivatives may be used.

The binder is a component that assists in coupling of an active material, a conductive material, and the like, and in coupling of a current collector, and typically, may be added in an amount of 0.1 to 30% by weight, specifically 1 to 10% by weight, more specifically 1 to 5% by weight based on the total weight of the positive electrode mixture layer. An example of the binder may include polyvinylidene fluoride, polyvinylidene fluoride-hexafluoropropylene, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber, fluorine rubber, various copolymers, and the like.

The separator is an insulating thin film having high ion permeability and mechanical strength. The pore diameter of the separator is generally 0.01 to 10 *µ*m, and the thickness is generally 5 to 300 *µ*m. As such separator, for example, chemical resistant and hydrophobic olefin-based polymers such as polypropylene; sheets or non-woven fabrics made of glass fiber or polyethylene is used. When a solid electrolyte such as a polymer is used as the electrolyte, the solid electrolyte may also serve as a separator.

According to yet another embodiment of the present disclosure, there is provided a lithium free battery comprising a positive electrode, a negative electrode, a separator, and a lithium non-aqueous electrolyte, wherein the negative electrode comprises the negative electrode current collector according to the above-mentioned embodiment, and a lithium layer formed on the negative electrode current collector.

At this time, as described above, the lithium layer may be formed on the negative electrode current collector later by charging the lithium free battery thereafter.

More specifically, the lithium free battery is prepared by housing an electrode assembly including a negative electrode current collector, a positive electrode, and a separator in a battery case together with a lithium non-aqueous electrolyte, sealing the battery case, and then activating it.

At this time, Li ions present in the non-aqueous electrolyte, which are ionized from the positive electrode by charging in the activation process, electrochemically react with the negative electrode current collector according to the present disclosure, and a lithium layer is deposited on the surface of the negative electrode current collector, and the lithium layer is used as the negative electrode active material.

The lithium non-aqueous electrolyte generally includes a lithium salt and a non-aqueous solvent. As the non-aqueous solvent, a non-aqueous organic solvent, an organic solid electrolyte, an inorganic solid electrolyte, or the like is used, but is not limited thereto.

As examples of the non-aqueous electrolyte, mention may be made of non-protic organic solvents, such as N-methyl-2-pyrollidinone, propylene carbonate, ethylene carbonate, butylene carbonate, dimethyl carbonate, diethyl carbonate, gamma-butyro lactone, 1,2-dimethoxy ethane, tetrahydroxyfuran, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate.

Examples of the organic solid electrolyte include polyethylene derivatives, polyethylene oxide derivatives, polypropylene oxide derivatives, phosphoric acid ester polymers, poly agitation lysine, polyester sulfide, polyvinyl alcohols, polyvinylidene fluoride, and polymers containing ionic dissociation groups, and the like.

Examples of the inorganic solid electrolyte include nitrides, halides and sulfates of lithium (Li) such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂.

The lithium salt is a material that is readily soluble in the non-aqueous electrolyte. The lithium salt may include, for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloroborane lithium, lower aliphatic carboxylic acid lithium, lithium tetraphenyl borate, imidebased salt, and the like.

In addition, in order to improve charge/discharge characteristics, flame retardancy and the like, the non-aqueous electrolyte may further include, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride, or the like. In some cases, in order to impart incombustibility, the electrolyte may further include halogen-containing solvents, such as carbon tetrachloride and ethylene trifluoride. Furthermore, in order to improve high-temperature retention characteristics, the electrolyte may further include carbon dioxide gas. In addition, it may further include fluoro-ethylene carbonate (FEC), propene sultone (PRS), and the like.

The battery case is not limited as long as it has a structure capable of housing an electrode assembly, and may be a pouch-type battery, or a prismatic or cylindrical battery case made of a metal can, which is known in the art.

Hereinafter, preferred examples of the present disclosure, comparative examples compared thereto, and test examples for evaluating them are described. However, it will be apparent to those skilled in the art that these examples are merely illustrative of the present disclosure, and various changes and modifications can be made within the scope and technical spirit of the present disclosure, and it goes without saying that such variations and modifications fall within the scope of the appended claims.

### <Example 1>

The lithium transition metal oxide (LiNi_{0.33}Co_{0.33}Mn_{0.33}O₂) was used as a positive electrode active material, PVdF as a binder, and Super-P as a conductive material. The positive electrode active material: the binder: the conductive material were added in a weight ratio of 96: 2: 2 to NMP to produce an active material slurry, which was then coated onto an Al foil at 4 mAh/cm² per one side, dried in a dryer at 130°C under an air atmosphere, and then rolled to prepare a positive electrode.

A graphene dispersion solution of graphene 1wt%/PVDF 2.5wt%/H-NBR 2.5wt%/NMP 94wt% was coated onto a 15 um copper foil, and then dried to prepare a 3 *µ*m thick primer layer, and a metal layer slurry (solid content = 50%), in which copper metal powder (average diameter (D50): 3 *µ*m) and binder(PVDF) were mixed in a weight ratio of 9:1 under NMP solvent, was coated thereon, and dried to form a 7 *µ*m thick metal layer, thereby obtaining a negative electrode.

An SRS separator having a thickness of 20 *µ*m was assembled on the positive electrode and the negative electrode using a stacking method, the assembled battery was housed in an aluminum pouch-type battery case, a solution of fluoroethylene carbonate (FEC) and ethylmethyl carbonate (EMC) in a volume ratio of 3:7 in which 3.5M of LiFSI was dissolved was injected, and then the battery case was sealed to prepare a monocell.

### <Example 2>

A monocell was prepared in the same manner in Example 1, except that in Example 1, a metal layer slurry prepared by mixing Zn powder (particle diameter (D50): 3 *µ*m) and a binder (PVDF) was coated and dried to form a 7 *µ*m thick metal layer.

### <Example 3>

A monocell was prepared in the same manner in Example 1, except that in Example 1, a mixture of copper metal powder (average diameter(D50): 3 *µ*m) and silicon powder (average diameter (D50): 3 *µ*m) in a weight ratio of 5:5, and a binder (PVDF) were mixed to prepare a metal layer slurry, which was then coated and dried to form a 7 *µ*m thick metal layer.

### <Example 4>

A monocell was prepared in the same manner in Example 1, except that in Example 1, a mixture of copper metal wire (average diameter (D50): 500 nm, aspect ratio: 10) and silicon powder (average diameter (D50): 3 *µ*m) in a weight ratio of 5:5, and a binder (PVDF) were mixed to prepare a metal layer slurry, which was then coated and dried to form a 7 *µ*m thick metal layer.

### <Example 5>

A monocell was prepared in the same manner in Example 1, except that in Example 1, a slurry of silver 95wt%/acrylic-based binder 5wt% was coated onto a 15um copper foil and dried to form a conductive epoxy layer, a metal layer slurry (solid content = 50%) in which copper metal powder (average diameter(D50): 3 *µ*m) and binder (PVDF) were mixed in a weight ratio of 9:1 under NMP solvent, was coated thereon, and dried to form a 7 *µ*m thick metal layer, thereby obtaining a negative electrode.

### <Comparative Example 1>

A monocell was prepared in the same manner as in Example 1, except that in Example 1, a 15 um thick Cu foil was applied as the negative electrode as it was, except for the primer layer and the metal layer located on the negative electrode.

### <Comparative Example 2>

A monocell was prepared in the same manner as in Example 1, except that in Example 1, only a 3 um primer layer was coated onto a 15 um thick Cu foil, and the resulting negative electrode was applied as it was, except for the metal layer located on the negative electrode.

### <Comparative Example 3>

A monocell was prepared in the same manner as in Example 1, except that in Example 1, instead of a primer layer, Ag was vacuum-deposited to a thickness of 20 nm on a 15 um copper foil to prepare a conductive layer, and a metal layer was applied onto the conductive layer.

### <Experimental Example 1>

The batteries prepared in Examples 1 to 5 and Comparative Examples 1 to 3 were charged under the following conditions, and then the batteries were decomposed to calculate the thickness and deposition density of the lithium electrodeposition layer formed on the negative electrode, and the results are shown in Table 2 below..
Charge: 0.2C, CC/CV, 4.25V, 1/20C cut-off

For the measurement of the thickness of the electrodeposition layer, the average of the thicknesses was obtained by selecting two arbitrary points, and the deposition density of the electrodeposition layer was digitalized by calculating the deposition mass and deposition volume.

**[Table 1]**

| | Thickness of lithium layer (um) | Deposition density of lithium layer (g/cc) |
|---|---|---|
| Example 1 | 45 | 0.23 |
| Example 2 | 37 | 0.28 |
| Example 3 | 40 | 0.26 |
| Example 4 | 35 | 0.30 |
| Example 5 | 44 | 0.23 |
| Comparative Example 1 | 95 | 0.11 |
| Comparative Example 2 | 90 | 0.12 |
| Comparative Example 3 | 48 | 0.22 |

| | | |
|---|---|---|
| (Theoretical density of lithium metal: 0.54g/cm³) | | |

Referring to Table 1, it can be seen that in the case of including the metal layer according to Examples 1 to 5 of the present disclosure, the thickness of the lithium layer is thin and the density is improved, so that the layer is formed more densely, whereas in the absence of the metal layer (Comparative Examples 1 and 2), the deposition density is very low.

In addition, when comparing Examples 1 to 3 with Example 4, it can be seen that the form in which the metal powder and the metal wire are mixed has the most excellent deposition density of the lithium layer.

### <Experimental Example 2>

The batteries of Examples 1 to 5 and Comparative Examples 1 to 3 were charged and discharged at 0.2 C, and the one-time discharge capacity was measured. Charge and discharge were additionally performed under the following conditions, and then the 150-time discharge capacity retention relative to the one-time discharge capacity was calculated, and the results are shown in Table 2 below.
Charge: 0.2C, CC / CV, 4.25V, 1 / 20C cut-off
Discharge: 0.5C, CC, 3.0 V, cut-off

**[Table 2]**

| | One-time capacity (mAh) | 150-time capacity retention (%) |
|---|---|---|
| Example 1 | 58.9 | 85 |
| Example 2 | 59.3 | 91 |
| Example 3 | 58.8 | 89 |
| Example 4 | 59.5 | 95 |
| Example 5 | 59.1 | 80 |
| Comparative Example 1 | 58.1 | 20 |
| Comparative Example 2 | 58.2 | 30 |
| Comparative Example 3 | 58.9 | 65 |

Referring to Table 2, it can be confirmed that Examples 1 to 5 are excellent in lifetime characteristics while being increased in the density of the lithium layer. From the viewpoint of these results, it is confirmed that the metal layer serves to increase the deposition density while lowering the resistance of the negative electrode, which is considered to improve the lifetime accordingly.

Further, when comparing Example 5 with Comparative Example 3, it can be seen that compared to electrodepositing Ag metal in a thin thickness as the conductive layer, forming a conductive epoxy layer containing metal particles in the form of metal particles is much more advantageous for lifetime characteristics.

This is considered to be because, when an Ag metal thin film is formed with a thin thickness, it is difficult to maintain its shape during the charging/discharging process of Li, and it is consumed, which leads to a limit in performing the role of a conductive layer.

It will be appreciated by those skilled in the art that various applications and modifications can be made without departing the sprit and scope of the invention based on the above description.

### [industrial Applicability]

As described above, the negative electrode current collector according to an embodiment of the present disclosure has a form including a conductive layer and a metal layer having a grain boundary on at least one surface of a metal current collecting substrate, and when used as a negative electrode of a lithium free battery, lithium electrodeposition due to charging and discharging is uniformly performed, which is thus effective in increasing the deposition density of a lithium layer formed therefrom.

In addition, this makes it possible to minimize a side reaction the electrolyte solution of the lithium free battery including the negative electrode current collector and thus improve the lifetime characteristics.

## Claims

1. A negative electrode current collector for a lithium free battery, the negative electrode current collector comprising:
a metal current collecting substrate, a conductive layer that is formed on at least one surface of the metal current collecting substrate and includes a conductive material; and a metal layer that is formed on the conductive layer and has a grain boundary,
wherein the metal layer comprises a metal powder layer, a metal wire layer, or a mixed layer thereof.

2. The negative electrode current collector for a lithium free battery according to claim 1, wherein:
the metal current collecting substrate is at least one selected from the group consisting of copper, stainless steel, aluminum, nickel, titanium, calcined carbon, and an aluminum-cadmium alloy.

3. The negative electrode current collector for a lithium free battery according to claim 1, wherein:
the metal current collecting substrate is a metal containing copper.

4. The negative electrode current collector for a lithium free battery according to claim 1, wherein:
the conductive layer is a primer layer, a conductive polymer layer, or a conductive epoxy layer.

5. The negative electrode current collector for a lithium free battery according to claim 4, wherein:
the primer layer comprises a conductive material and an adhesive material, and
the conductive material comprises at least one selected from the group consisting of natural graphite, artificial graphite, graphene, carbon black, channel black, furnace black, lamp black, thermal black, carbon nanotube, graphite nanofiber, carbon nanofiber, aluminum, nickel, zinc oxide, potassium titanate, titanium oxide and a polyphenylene derivative.

6. The negative electrode current collector for a lithium free battery according to claim 4, wherein:
the conductive polymer layer comprises at least one conductive polymer selected from the group consisting of poly(3,4-ethylenedioxythiophene)/poly(4-styrene sulfonate) (PEDOT/PSS), polyaniline (PANI), polypyrrole (PPy), polythiophene (PT), polyacetylene (PA), and poly para-phenylene vinylene (PPV).

7. The negative electrode current collector for a lithium free battery according to claim 4, wherein:
the conductive epoxy layer comprises a conductive filler and a binder, and
the conductive filler comprises at least one selected from the group consisting of metal powders of gold, platinum, silver, copper, or nickel, carbon or carbon fibers, graphite, and composite powders.

8. The negative electrode current collector for a lithium free battery according to claim 1, wherein:
the metal layer is a form in which at least one material selected from copper, stainless steel, aluminum, nickel, titanium, calcined carbon, aluminum-cadmium alloy, Mg, Ca, Si, Ge, Sn, Pb, As, Sb, Bi, Ag, Zn, Cd, P and Hg has a grain boundary, and
the metal powder of the metal powder layer or the metal wire of the metal wire layer has a diameter of 0.01 *µ*m to 30 *µ*m.

9. The negative electrode current collector for a lithium free battery according to claim 8, wherein:
the metal wire has an aspect ratio (wire length / wire diameter) of 3 or more.

10. The negative electrode current collector for a lithium free battery according to claim 8, wherein:
the mixed layer comprises at least one metal powder selected from the group consisting of copper, stainless steel, nickel, titanium, calcined carbon, and an aluminum-cadmium alloy, and at least one metal wire selected from the group consisting of Mg, Ca, Al, Si, Ge, Sn, Pb, As, Sb, Bi, Ag, Zn, Cd, P and Hg.

11. The negative electrode current collector for a lithium free battery according to claim 8, wherein:
the mixed layer comprises at least one metal powder selected from the group consisting of Mg, Ca, Al, Si, Ge, Sn, Pb, As, Sb, Bi, Ag, Zn, Cd, P and Hg, and at least one metal wire selected from the group consisting of copper, stainless steel, nickel, titanium, calcined carbon, and an aluminum-cadmium alloy.

12. The negative electrode current collector for a lithium free battery according to claim 1, wherein:
a total thickness of the conductive layer and the metal layer is in the range of 0.1 *µ*m to 60 *µ*m.

13. The negative electrode current collector for a lithium free battery according to claim 12, wherein:
the conductive layer has a thickness in the range of 0.1 *µ*m to 20 *µ*m.

14. The negative electrode current collector for a lithium free battery according to claim 12, wherein:
the metal layer has a thickness in the range of 0.1 *µ*m to 40 *µ*m.

15. An electrode assembly comprising:
the negative electrode current collector of claim 1;
a positive electrode having a structure in which a positive electrode mixture including an active material is applied to at least one surface of a positive electrode current collector; and
a separator interposed between the negative electrode current collector and the positive electrode.

16. A lithium free battery comprising a positive electrode, a negative electrode, a separator, and a lithium non-aqueous electrolyte,
wherein the negative electrode comprises the negative electrode current collector of claim 1, and a lithium layer formed on the negative electrode current collector, and
wherein the lithium layer is formed by charging a lithium free battery.
